# EUROPEAN PATENT APPLICATION

(11) **EP 2 273 080 A2**
(43) Date of publication of application: **12.01.2011**
(21) Application number: 10168188.0
(22) Date of filing: 01.07.2010
(51) Int. Cl.: F01N 3/05, F01N 13/08

(54) **Air injection system for engine exhaust**

(30) Priority: 08.07.2009 US 499728
(71) Applicant: Briggs & Stratton Corporation, Wauwatosa, WI 53222 (US)
(72) Inventor: Raasch, Jason J., Wauwatosa, WI Wisconsin 53222 (US)
(74) Representative: Lawrence, John

(57) **Abstract**

An engine (112) with an exhaust pathway air injection system includes a combustion chamber (342) having an exhaust port (250) and a crankcase (312) having an opening formed in the crankcase (312). The opening is designed to allow pressure pulses from within the crankcase (312) to be received through the opening. The engine (112) also includes an air pump (310; 414; 510; 610) having an inlet (322; 512; 612), an outlet (324; 514; 614), and a pumping mechanism. The air pump (310,414,510,610) is attached to the opening formed in the crankcase (312). Pressure pulses power the pumping mechanism. Additionally the engine (112) includes a manifold (254; 346) attaching the exhaust port (250) and the pump outlet (324,514,614).

## Description

### BACKGROUND

The present invention relates generally to the field of combustion engines for use with power equipment and powered tools. More specifically, the present invention relates to systems for reducing pollutant emissions from exhaust gases of gasoline-powered combustion engines.

Combustion engines produce pollutants in their exhaust. The pollutants include hydrocarbon emissions, nitric oxide, carbon dioxide, and other pollutants. The pollutants may be produced by unspent fuel or oil mixed in with the exhaust gases.

Emission of pollutants may be reduced through the use of a catalyst muffler. A catalyst muffler (or catalytic converter) includes a precious metal, such as platinum, that chemically reacts with pollutants in exhaust gases, converting the pollutants into other byproducts that are not pollutants. However, the precious metals can be costly. Further, catalyst mufflers get quite hot during operation. The chemical reactions cause a high temperature increase in the catalyst proportional to the heat flux from the chemical reaction.

Air injection systems can also serve to reduce pollutants in exhaust emissions. Such systems inject fresh air into the exhaust stream. As unspent fuel (mixed with other exhaust gases) exits the combustion chamber, it is hot and still potentially combustible. While still sufficiently hot, the unspent fuel may be exposed to a fresh source of oxygen, allowing the unspent fuel to combust or oxidize, thus removing a source of pollutants. Like catalyst mufflers, air injection systems also cause a temperature increase in the exhaust gases proportional to the heat flux from the chemical reactions. However, the temperature increase may be evenly distributed in the exhaust gases.

### SUMMARY

One embodiment of the invention relates to an engine with an exhaust pathway air injection system. The engine includes a combustion chamber having an exhaust port and a crankcase having an opening formed in the crankcase. The opening is designed to allow pressure pulses from within the crankcase to be received through the opening. The engine also includes an air pump having an inlet, an outlet, and a pumping mechanism. The air pump is attached to the opening formed in the crankcase. Pressure pulses power the pumping mechanism. Additionally the engine includes a manifold attaching the exhaust port and the pump outlet.

Another embodiment of the invention relates to an engine including a crankcase having an opening formed in the crankcase. The opening is designed to allow pressure pulses from within the crankcase to be received through the opening. The engine also includes an air pump having an inlet, an outlet, a pumping mechanism, a first check valve, and a second check valve. The pressure pulses power the pumping mechanism. Fresh air enters the inlet past the first check valve and is directed through the outlet past the second check valve.

Yet another embodiment of the invention relates to an air injection system for use with a combustion engine. The system includes a housing forming an inlet, an outlet, and a chamber. Also, the system includes a pumping mechanism powered by an oscillating air pressure from within an engine. Further the system includes a first check valve and a second check valve. The first check valve opens to permit fresh air to enter the chamber, such that the fresh air pulled into the chamber by the pumping mechanism. The second check valve opens to permit the fresh air to exit the chamber, such that the fresh air pushed out of the chamber by the pumping mechanism. The housing is designed to be attached to a crankcase over an opening in the crankcase where the housing and the pumping mechanism seal the opening, separating the fresh air from crankcase air.

Alternative exemplary embodiments relate to other features and combinations of features as may be generally recited in the claims.

### BRIEF DESCRIPTION OF THE FIGURES

The disclosure will become more fully understood from the following detailed description, taken in conjunction with the accompanying figures, wherein like reference numerals refer to like element in which:

FIG. 1 is a perspective view of power equipment having an engine-vacuum powered air injection system for reduced emissions according to an exemplary embodiment.

FIG. 2 is a cut-away perspective view of a portion of an engine according to an exemplary embodiment.

FIG. 3A is a schematic diagram of an air injection system in a first orientation according to an exemplary embodiment.

FIG. 3B is a schematic diagram of the air injection system of FIG. 3A in a second orientation.

FIG. 4 is a schematic diagram of an air injection system according to another exemplary embodiment.

FIG. 5 is a schematic diagram of an air injection system according to yet another exemplary embodiment.

FIG. 6 is a schematic diagram of an air injection system according to still another exemplary embodiment.

### DETAILED DESCRIPTION OF THE EXEMPLARY EMBODIMENTS

Before turning to the figures, which illustrate the exemplary embodiments in detail, it should be understood that the present application is not limited to the details or methodology set forth in the description or illustrated in the figures. It should also be understood that the terminology is for the purpose of description only and should not be regarded as limiting.

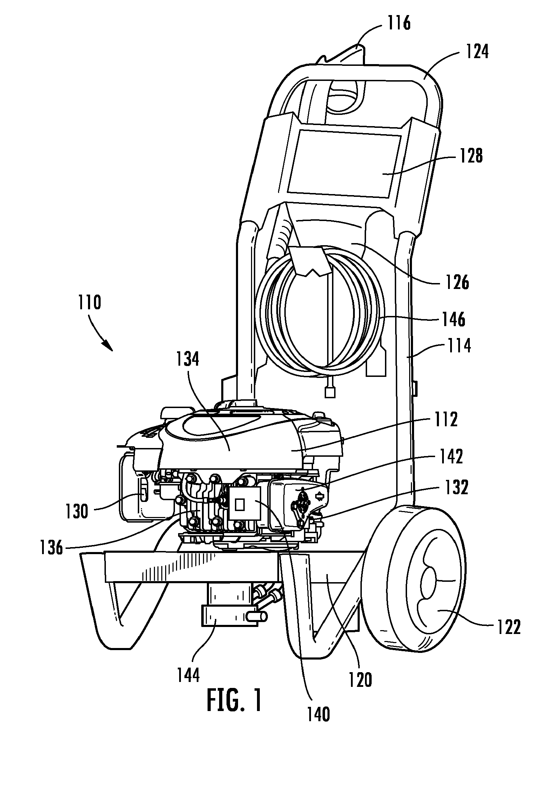

FIG. 1 shows power equipment according to an exemplary embodiment. The power equipment is in the form of a pressure washer system 110 having an engine 112, a frame 114, and a pressure washer gun 116. A base plate 120, wheels 122, a handle 124, a hose reel 126, a console 128, and other features are coupled to the frame 114. The engine 112 is coupled to the base plate 120. The engine 112 additionally includes a primary air intake 130, a crankcase 132, a shroud 134, a cylinder head 136, an air injection system for an exhaust, and other engine components. A portion of the air injection system is shown as a secondary air intake 140. The secondary air intake 140 is coupled to the engine 112 apart from the primary air intake 130, and proximate to a muffler 142. The engine 112 of the pressure washer system 110 powers a pressure washer pump 144, which may be coupled to the pressure washer gun 116 via a hose 146.

While FIG. 1 shows power equipment in the form of the pressure washer system 110, other embodiment systems include lawn mowers, secondary power generators, snow blowers, front- and rear-tine tillers, edgers, chippers, cultivators, and other power equipment utilizing a combustion engine. The combustion engine includes an air injection system through which air is injected into the exhaust stream to oxidize unburned fuel and oil, reducing pollutant emissions.

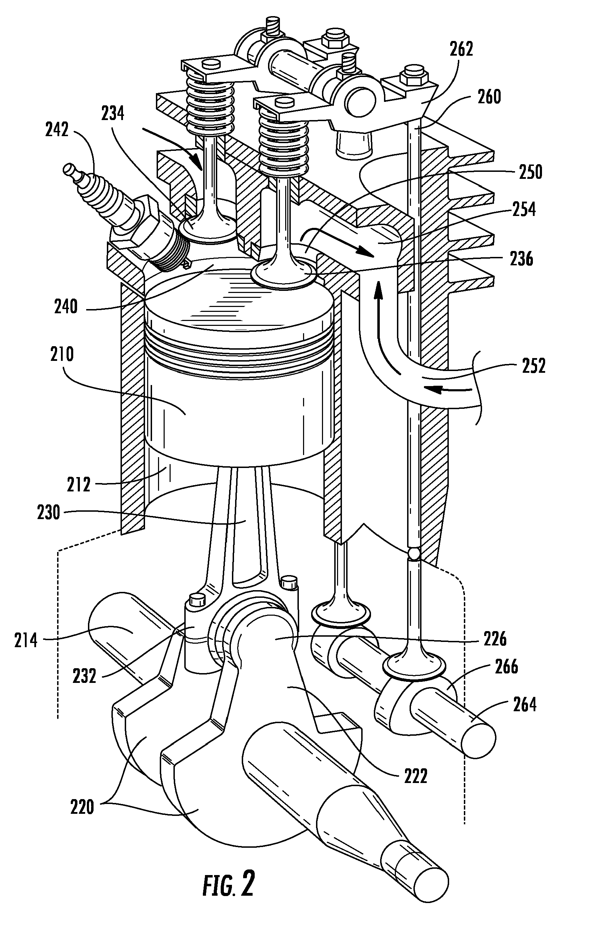

FIG. 2 shows a view of a portion of an internal combustion engine, such as the engine 112. Several internal engine components are shown, including a piston 210 in a cylinder 212, the piston 210 coupled to a crankshaft 214. The crankshaft 214 includes counter weights 220, webs 222, and a crankpin 226. A big end 232 of a connecting rod 230 is rotatably fastened to the crankpin 226. A small end (not shown) of the connecting rod 230 is pivotally coupled to the piston 210. Engine components further include overhead valves, shown as an intake valve 234 and an exhaust valve 236. Timing of the overhead valves is controlled by lobes 266 on a camshaft 264 coupled to the valves 234, 236 via push rods 260 and rockers 262. In other embodiments, the valves 234, 236 are not arranged in a configuration shown in FIG. 2, but are instead arranged in the foot of an L-shaped combustion chamber, in a cylinder head of a direct overhead valve with a hemispheric combustion chamber, or in other engine configurations.

The valves 234, 236 control the flow of fuel and air through the engine during combustion, which for the engine shown in FIG. 2 includes a four-stroke process of intake, compression, combustion, and exhaust. A mixture of air and fuel enters a combustion chamber 240, through the intake valve 234. The mixture is compressed and then ignited by a spark plug 242. The explosion in the combustion chamber 240 pushes the piston 210, which translates away from the valves 234, 236. Power from the piston 210 movement is transferred to the crankshaft 214 via the connecting rod 230, causing the crankshaft 214 to rotate. Rotational inertia of the crankshaft 214 is held within the mass of a flywheel (not shown) and the crankshaft 214, which drives the connecting rod 230 and piston 210 from a bottom-dead-center position back to a top-dead-center position, expelling exhaust gases from the combustion chamber 240. The exhaust gases are driven through an exhaust port 250, past the exhaust valve 236.

Still referring to FIG. 2, the engine includes an air injection system to combine fresh air with the exhaust gases. The air injection system includes a conduit 252 that couples to a manifold 254. The manifold 254 unites the fresh air from the air injection system with the exhaust gases. Oxygen in the fresh air causes unspent fuel in the exhaust gases to oxidize or combust, reducing hydrocarbon emissions and carbon monoxide emissions.

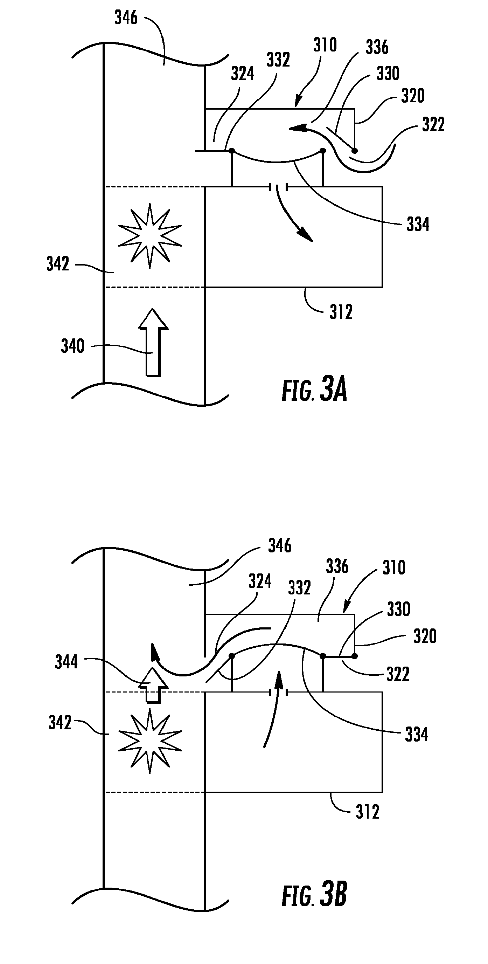

FIGS. 3A and 3B each show a schematic diagram of an air injection system according to an exemplary embodiment. The air injection system includes a pump 310 coupled to a crankcase 312 of a combustion engine. The pump 310 includes a housing 320 forming an inlet 322 and an outlet 324. The pump 310 also includes an inlet check valve 330, an outlet check valve 332, and a pumping mechanism between the inlet check valve 330 and the outlet check valve 332. The pumping mechanism as shown in FIG. 3A, is a positive displacement pumping mechanism using a diaphragm 334.

The pump 310 is powered by pressure pulses in the crankcase 312. The diaphragm 334 separates a collection chamber 336 in the pump 310 from gases in the crankcase 312. The combustion process causes gases within the crankcase to expand and contract with oscillations of the piston changing available volume within the crankcase. Pressure pulses result and cause the diaphragm 334 to stretch back and forth in an oscillatory manner changing the volume in the collection chamber 336 of the pump 310.

Fresh air from outside of the engine enters the collection chamber 336 through the inlet check valve 330. When pressure in the crankcase 312 decreases, the diaphragm 334 of the pump 310 stretches to increase the volume of air in the collection chamber 336 of the pump 310. The resulting lower pressure in the collection chamber 336 opens the inlet check valve 330 and closes the outlet check valve 332. Conversely, when the pressure in the crankcase 312 increases, the diaphragm 334 stretches in the opposite direction and the volume within the collection chamber 336 is reduced. Volume reduction in collection chamber 336 increases air pressure, causing the inlet check valve 330 to close and the outlet check valve 332 to open. As a result, the fresh air in the collection chamber 336 is pushed from the pump 310 into an exhaust stream.

Referring to the engine structure in FIGS. 3A and 3B, a separate flow of air is simultaneously traveling through the engine. Air from an engine air intake is directed past a carburetor where it collects fuel, forming an air and fuel mixture 340 (i.e., a "charge"). In alternate embodiments, the air is combined with fuel via a fuel injector. The mixture 340 is directed into a combustion chamber 342, where a spark plug ignites the mixture 340. In some embodiments, the fuel is ignited by heating of the mixture 340 in the combustion chamber due to a high compression pressure, which produces a temperature great enough to ignite the air and fuel mixture 340, without a spark plug. While some embodiments may include diesel engines, the exhaust of the diesel engines should be hot enough to allow for oxidation of the unspent fuel. Following combustion of the mixture 340, exhaust gases 344 carrying burned (and unburned) fuel are ejected from the combustion chamber 342 through an exhaust port.

The exhaust gases 344 exiting from the combustion chamber 342 are directed to a manifold 346. Joining the exhaust gases 344 in the manifold 346 is the fresh air exiting the pump 310 via check valve 332. Oxygen in the fresh air combines with the exhaust gases 344 to burn unspent fuel, reducing pollutant emissions. In some embodiments, the manifold is a chamber within the engine. In other embodiments, the manifold is the juncture of an exhaust pipe and a conduit from the pump 310 or other air injection system. In still other embodiments, the manifold is a juncture of a plurality of exhaust pipes and the pump outlet 324.

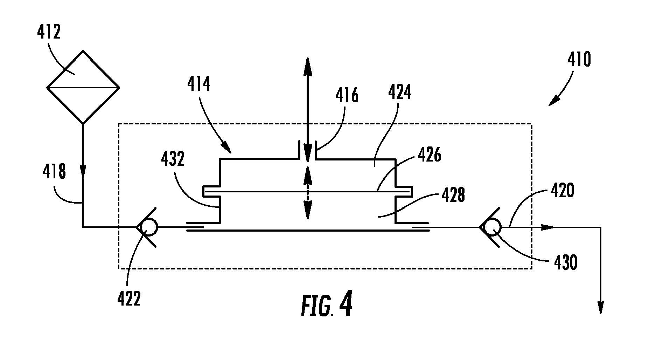

FIG. 4 shows a schematic diagram of an air injection system according to another exemplary embodiment. The air injection system is in the form of an air pump system 410 including a filtered air intake 412, a diaphragm pump 414, and a conduit 416 in communication with a crankcase or intake manifold of an engine. Pressure pulses from the crankcase or intake manifold are communicated through the conduit 416. The air pump system 410 further includes conduits 418, 420 linking the pump 414 both to the intake 412 and to a manifold coupled to a combustion chamber exhaust port. Additionally, the pump 414 includes an inlet check valve 422, an inner chamber 424, a diaphragm 426, a pumping chamber 428, and an outlet check valve 430.

In at least one embodiment, the pumping chamber 428 is integral to the crankcase. The walls of the crankcase form an opening, where the cross section of the opening forms sides to the pumping chamber 428. The diaphragm 426 forms a seal over the opening and a pump housing 432 extends from the diaphragm 426. In some embodiments, the housing 432 extends into the crankcase. In other embodiments, the housing 432 extends away from the crankcase. In still other embodiments, the housing 432 extends both into and out of the crankcase. Close proximity of the diaphragm 426 to the inside of the crankcase reduces power losses in the pump 414 due to reduced drag in the conduit 416. Further, close proximity of the pump 414 to the exhaust port of a combustion chamber also reduces power losses.

The diaphragm 426 may be constructed of a polymer, such as a high-temperature rubber. The diaphragm 426 should be designed to withstand corrosion from a fuel and oil mist, fatigue loading of the pressure pulses, and high temperatures of the reciprocating gases of the crankcase. In some embodiments, the diaphragm 426 is molded from a tough plastic. In other embodiments, the diaphragm 426 may be constructed of flexible plates of aluminum, aluminum alloy, steel, or other metals. In still other embodiments, where the diaphragm is coupled to the intake manifold, the diaphragm construction and material should be designed to withstand the conditions of air from the intake manifold.

In the embodiment of FIG. 4, the check valves 422, 430 are reed valves. In some embodiments, the reed valves are interchangeable with reed valves in standard fuel pumps. In other embodiments, the reed valves may be interchangeable with reed valves used for standard crankcase breathers. In some embodiments, the reed valves may be biased by a steel torsional spring designed for a long fatigue life. However in other embodiments, the inlet check valve includes an in-line disc style check valve that includes two ports. In still other embodiments, other types of valves are used.

The size and configuration of the pump system 410 may be varied depending upon engine size, type, capacity, or application. For example, in some small engines embodiments the pump system 410 is designed to produce an air flow rate ranging from approximately 20 cubic feet per hour (cfh) to 400 cfh, preferably from 30 cfh to 80 cfh, In at least one exemplary embodiment, the flow rate is approximately 45 cfh, however the optimal rate is a function of engine size and exhaust flow rate.

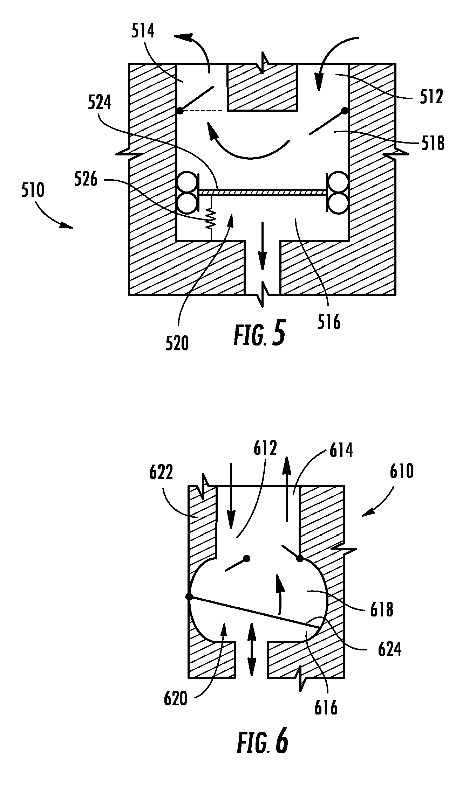

FIGS. 5 and 6 show air injection systems according to other exemplary embodiments. More specifically, FIG. 5 shows an air pump 510 of an air injection system. The pump 510 includes an inlet 512, an outlet 514, an inner chamber 516, and a pumping chamber 518. FIG. 6 shows an air pump 610 of an air injection system according to another exemplary embodiment. The pump 610 also includes an inlet 612, an outlet 614, an inner chamber 616, and a pumping chamber 618.

Referring to FIG. 5, the inner chamber 516 and the pumping chamber 518 are divided by a pumping mechanism 520. The pumping mechanism 520 includes a rigid plate 524 coupled to sides 522 of the pump 510 and a biasing member 526, such as a spring or flexible rod, that absorbs and releases energy transferred to the pumping mechanism 520 via pressure pulses from a crankcase. The plate 524 of the pumping mechanism 520 moves back and forth within the pump 510 to increase and decrease the volume of the pumping chamber 518 and inner chamber 516 in response to pressure pulses from an engine.

Referring now to the air injection system shown in FIG. 6, a pumping mechanism 620 includes a hinged flap 624 coupled to a wall 622 of the pump 610. One side of the flap 624 is hinged to the wall 622, while the other side is free slide back and forth. Movement of the flap 624 converts the pressure pulses into pumping power.

The construction and arrangements of the air injection system for an engine exhaust, as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. In some embodiments, an injection system directs air into the intake side of a combustion engine to increase the volume or pressure of air entering the combustion chamber. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of the present invention.

## Claims

1. An engine with an exhaust pathway air injection system, the engine comprising:
a combustion chamber having an exhaust port;
a crankcase having an opening formed therein, the opening configured to allow pressure pulses from within the crankcase to be received therethrough;
an air pump having an inlet, an outlet, and a pumping mechanism, the air pump coupled to the opening formed in the crankcase, wherein the pressure pulses power the pumping mechanism; and
a manifold coupling the exhaust port and the pump outlet.

2. The engine of claim 1, wherein the manifold is adjacent to the combustion chamber.

3. An engine, comprising:
a crankcase having an opening formed therein, wherein the opening is configured to allow pressure pulses from within the crankcase to be received therethrough;
an air pump having an inlet, an outlet, a pumping mechanism, a first check valve, and a second check valve, wherein the pressure pulses power the pumping mechanism, and wherein fresh air enters the inlet past the first check valve and is directed through the outlet past the second check valve.

4. The engine of any preceding claim, wherein the pumping mechanism separates crankcase air from fresh air passing through the pump.

5. The engine of any preceding claim, wherein the pumping mechanism comprises a diaphragm; or
the system of claim 16, wherein the pumping mechanism comprises a diaphragm.

6. The engine of any preceding claim, wherein the engine is one of a single-cylinder or twin-cylinder, four-stroke cycle, internal combustion engine configured to be fueled by gasoline.

7. The engine of any preceding claim, further comprising a primary air intake coupled to the combustion chamber, whereby air passing through the primary air intake is directed to the combustion chamber, and wherein the air pump inlet is coupled to the primary air intake.

8. The engine of any of claims 1 to 7, further comprising a primary air intake and a secondary air intake, wherein the pump inlet is coupled to the secondary air intake.

9. The engine of claim 8, wherein the secondary air intake includes an air filter.

10. The engine of claim 8 or claim 9, wherein the air pump and the secondary air intake are attached to the engine adjacent to a muffler.

11. The engine of any preceding claim, wherein the engine does not include a catalytic converter.

12. The engine of claim 3, further comprising a manifold, wherein the fresh air from the pump is combined in the manifold with air from a second source within the engine.

13. The engine of claim 12, wherein the second source comprises an exhaust port of a combustion chamber.

14. The engine of any preceding claim, wherein the pump is a positive displacement pump.

15. An air injection system for use with a combustion engine, comprising:
a housing forming an inlet, an outlet, and a chamber;
a pumping mechanism powered by an oscillating air pressure from within an engine;
a first check valve, wherein the first check valve opens to permit fresh air to enter the chamber, the fresh air pulled into the chamber by the pumping mechanism; and
a second check valve, wherein the second check valve opens to permit the fresh air to exit the chamber, the fresh air pushed out of the chamber by the pumping mechanism,
wherein the housing is configured to be attached to a crankcase over an opening in the crankcase such that the housing and the pumping mechanism seal the opening, separating the fresh air from crankcase air.

16. The system of claim 15, wherein the first valve is closed when the second valve is open and the second valve is closed when the first valve is open.
